(19) Europäisches Patentamt
European Patent Office
Office européen des brevets

(11) Veröffentlichungsnummer: **0 338 208 A1**

# (12) EUROPÄISCHE PATENTANMELDUNG

(21) Anmeldenummer: **89102976.1**

(22) Anmeldetag: **21.02.89**

(51) Int. Cl.⁴: **C08G 65/44 , C08L 71/04 , //(C08L71/04,77:00)**

(30) Priorität: **21.04.88 DE 3813355**

(43) Veröffentlichungstag der Anmeldung: **25.10.89 Patentblatt 89/43**

(84) Benannte Vertragsstaaten: **AT BE DE FR GB IT NL SE**

(71) Anmelder: **HÜLS AKTIENGESELLSCHAFT**
**- RSP Patente / PB 15 - Postfach 13 20**
**D-4370 Marl 1(DE)**

(72) Erfinder: **Neugebauer, Wolfgang, Dr.**
**Karl-Leisner-Strasse 3**
**D-4408 Dülmen-Merfeld(DE)**
Erfinder: **Bartmann, Martin, Dr.**
**Burgstrasse 35**
**D-4350 Recklinghausen(DE)**
Erfinder: **Kowalczik, Udo, Dr.**
**Camillo-Sitte-Weg 4**
**D-4630 Bochum 1(DE)**

## (54) Funktionalisierte Polyphenylenether und Verfahren zu ihrer Herstellung.

(57) Ziel der Erfindung war es, Polyphenylenether mit hinreichend hohem Molekulargewicht bereit zu stellen, die mit Polyamiden verträglich sein sollten.

Die jetzt gefundenen Polyphenylenether enthalten die funktionellen Endgruppen

$$-(R)_n - \overset{O}{\overset{\|}{C}} - NR_5 - CH_2 - CH_2 - OH \text{ und/oder}$$

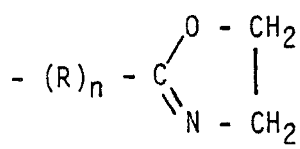

R ist ein 2-wertiger aliphatischer Rest mit 1 bis 12 C-Atomen,
n hat den Wert 0 oder 1 und
$R_5$ steht für Wasserstoff, eine Alkylgruppe mit 1 bis 8 Atomen und eine Hydroxyalkylgruppe mit 2 bis 8 C-Atomen.

Die neuen Polyphenylenether eignen sich insbesondere zur Herstellung von PA-haltigen Formmassen.

EP 0 338 208 A1

## Funktionalisierte Polyphenylenether und Verfahren zu ihrer Herstellung

Die Erfindung betrifft Polyphenylenether, die reaktionsfähige Endgruppen tragen.

Polyphenylenether (PPE) bilden eine bekannte Klasse der thermoplastischen Konstruktionswerkstoffe, die sich durch hohe Wärmeformbeständigkeit und Widerstandsfähigkeit gegenüber heißem Wasser, Säuren und Laugen auszeichnet. Ihre Herstellung durch oxidative Kopplung wird in der Patentliteratur ausführlich beschrieben (vgl. US-PSS 33 06 874, 33 06 875, EP-PSS 0 098 929, 0 099 965, 0 122 394, 0 137 139 sowie DE-OS 34 42 141). Für manche Anwendungszwecke, wie z. B. Blends mit Polyamiden, ist die chemisch weitgehend inerte Natur dieses Polymeren jedoch nachteilig, und es ist in solchen Fällen erwünscht, daß das PPE eine bestimmte Mindestmenge an reaktionsfähigen Gruppen enthält.

Es gibt grundsätzlich vier Möglichkeiten, funktionelle Gruppen in Polyphenylenether einzuführen:

I. Die phenolischen Endgruppen des unfunktionalisierten Polyphenylenethers werden mit geeigneten Agentien, z. B. Anhydriden, Säurechloriden zur Reaktion gebracht (vgl. DE-PS 25 05 329 und WO 86/02 086).

II. Die in 2- und 6-Stellung befindlichen Alkylgruppen des Phenols im Polyphenylenether werden zur Reaktion gebracht.

III. Man führt die Copolymerisation eines 2,6-dialkylierten Phenols mit einem entsprechenden Phenol, das in 4-Stellung eine funktionelle Gruppe trägt, durch. Es ist bekannt, daß auf diese Weise das Molekulargewicht des Polyphenylenethers geregelt werden kann (vgl. DE-OS 17 45 201).

IV. Man führt die Copolymerisation eines 2,6-dialkylierten Phenols mit einem entsprechenden funktionalisierten Phenol, das in 4-Stellung keine funktionelle Gruppe trägt, durch.

Das Verfahren gemäß I ist in seiner Anwendung auf solche Verbindungen beschränkt, die imstande sind, mit den in großer Verdünnung vorliegenden, wenig reaktiven phenolischen Endgrupen zu reagieren.

Die in 2- und 6-Stellung befindlichen Alkylgruppen sind einer chemischen Reaktion noch schwerer zugänglich. Praktisch ist man auf den Einsatz von Halogenen und starken Oxydationsmitteln beschränkt, die imstande sind, ein Wasserstoffatom am Alpha-C-Atom zu abstrahieren. Beispielsweise beschreibt die JP-OS 86 066 452 ein Verfahren, bei dem ein Polyphenylenether in der Schmelze mit Maleinsäureanhydrid und Peroxid zur Reaktion gebracht wird. Die Verfahrensweise ist problematisch, da das Anhydrid unter diesen Bedingungen flüchtig und sehr toxisch ist.

V. Percec et al. beschreiben ein Verfahren zur Herstellung von Polyphenylenethern, die über die Kette statistisch verteilt Oxazolingruppen enthalten. Man bromiert zunächst die Seitenketten des PPE und führt anschließend eine phasentransferkatalysierte Veretherung mit dem Natriumsalz des 2-(p-Hydroxyphenyl)-oxazolins durch. Das Verfahren erfordert einen doppelten Lösungsmittelwechsel und liefert keine bromfreien Produkte (vgl. Polymer Bulletin 12, 261 bis 268 (1984).

Die oxidative Kupplungsreaktion von Phenolen liefert bekanntlich nur dann hochwertige, polymere Produkte, wenn die Redoxpotentiale des Phenols und die des Katalysators sorgfältig aufeinander abgestimmt sind. Aus diesem Grunde und aufgrund praktischer Überlegungen setzt man in der Praxis nahezu ausschließlich 2,6-Dimethylphenol ein. Funktionelle Gruppen verändern das Oxidationspotential des Phenolmonomeren drastisch.

Es ist ungewiß, ob solche funktionellen Phenole bei der Polykondensation überhaupt mit eingebaut werden. Eine Copolymerisation, wie sie vorstehend unter III und IV beschrieben wurde, ist daher grundsätzlich als problematisch anzusehen.

Ortho- oder metaverknüpfte Polyphenylenether, die durch Kupplung von p-substituierten Phenolen der Formel

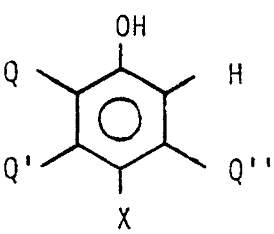

unter Druck erhältlich sind, werden in der DE-OS 34 14 882 beschrieben. X ist hierbei ein Halogen oder ein

nahezu beliebiger organischer Rest, der auch funktionelle Gruppen tragen kann. X ist beispielsweise ein substituierter Alkylrest mit 1 bis 20 C-Atomen, wie z. B. ein aromatischer Oxazolylrest. Die Reste Q, Q′ und Q″ stehen für Wasserstoff oder einen maximal 3 C-Atome aufweisenden Rest. Diese Kondensationsprodukte weisen jedoch wegen ihrer heterogenen Struktur (starke Verzweigung und hohe Uneinheitlichkeit) und der andersartigen Verknüpfung nur eine sehr entfernte Ähnlichkeit mit den p-verknüpften, "klassischen" Polyphenylenethern auf.

Ziel der vorliegenden Erfindung war es, einen Polyphenylenether mit hinreichend hohem Molekulargewicht bereit zu stellen, durch dessen funktionelle Endgruppen eine gute Verträglichkeit mit Polyamiden gewährleistet sein sollte.

Es wurden jetzt solche Polyphenylenether gefunden. Diese enthalten die funktionelle Endgruppe

$$-(R)_n-\overset{\overset{\displaystyle O}{\|}}{C}-NR_5-CH_2-CH_2-OH$$ und/oder

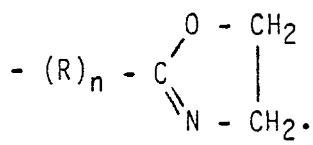

Hierbei steht $R_5$ für Wasserstoff,
eine Alkylgruppe mit 1 bis 8 C-Atomen oder
eine Hydroxyalkylgruppe mit 2 bis 8 C-Atomen.
R ist ein 2-wertiger aliphatischer Rest mit 1 bis 12 C-Atomen und n hat den Wert 0 oder 1.

Die funktionalisierten Polyphenylenether gemäß Anspruch 1 oder 2 lassen sich nach 2 grundsätzlich unterschiedlichen Verfahren herstellen. Das erste Verfahren besteht darin, eine Mischung aus 90 bis 99,8 Mol-% eines oder mehrerer Phenole der allgemeinen Formel I

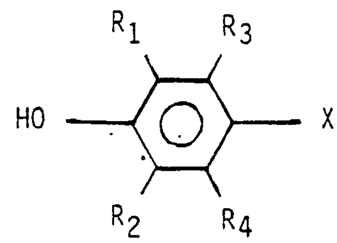

mit 0,2 bis 10 Mol-% eines oder mehrerer funktionalisierter Phenole der allgemeinen Formel II

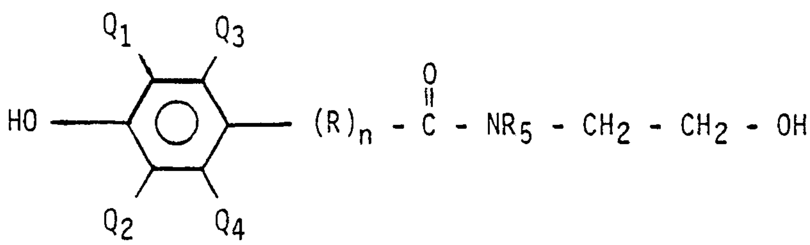

und/oder

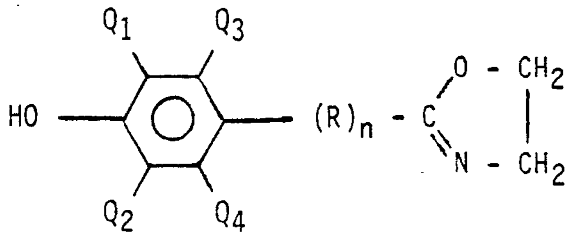

zu polykondensieren. Das zweite Verfahren besteht darin, ein Polykondensationsprodukt eines Phenols der Formel I mit einem Phenol der Formel II zu äquilibrieren.

Die beiden beschriebenen Verfahren liefern auf überraschend einfache Weise Polyphenylenether mit ausreichend hohem Molekulargewicht, die ohne weiteres mit Polyamiden verträglich sind.

Im folgenden soll die Erfindung detailliert beschrieben werden.

Ein Ausgangsprodukt für das erfindungsgemäße Verfahren sind Phenole der Formel I

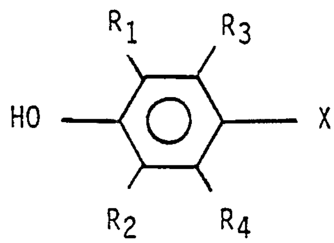

Hierbei sind $R_1$ und $R_2$ Reste aus der Gruppe
- Alkylrest mit 1 bis 10 C-Atomen
- Cycloalkylrest mit 5 bis 10 C-Atomen
- Arylrest mit 6 bis 10 C-Atomen
- Benzylrest

Die Reste $R_1$ und $R_2$ können verschiedene Bedeutungen haben; vorzugsweise haben $R_1$ und $R_2$ jedoch die gleiche Bedeutung. Der Alkylrest kann primärer, sekundärer oder tertiärer Art sein. Für den Fall, daß einer der beiden Reste für eine tert. Alkylgruppe steht, soll ausgeschlossen sein, daß gleichzeitig auch der andere Rest für eine tert. Alkylgruppe steht. $R_3$ und $R_4$ haben entweder die Bedeutung von Wasserstoff oder die gleiche Bedeutung, wie sie für die Reste $R_1$ und $R_2$ vorstehend angegeben wurde. X ist ein Halogen, insbesondere Brom, oder Wasserstoff. Als Ausgangsprodukt wird 2,6-Dimethylphenol bevorzugt. Gut geeignet sind aber auch 2-Methyl-6-ethylphenol, 2,6-Diethylphenol, 2-Methyl-6-tert.-butylphenol, 4-Brom-2,6-dimethylphenol, 4-Brom-2,6-diphenylphenol, 2,3,6-Trimethylphenol sowie 2-Allyl-6-methylphenol und 2.6-Dibenzylphenol.

Ein weiteres Ausgangsprodukt für das erfindungsgemäße Verfahren sind Phenole der Formel II

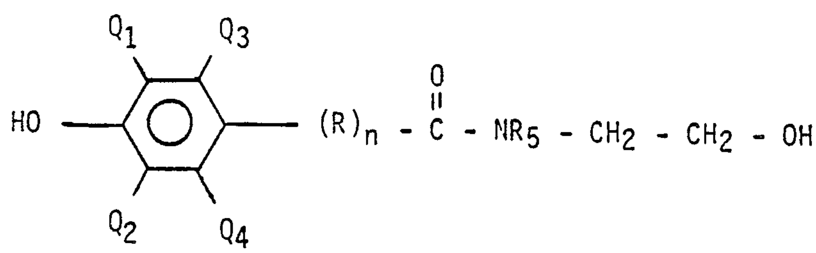

und/oder

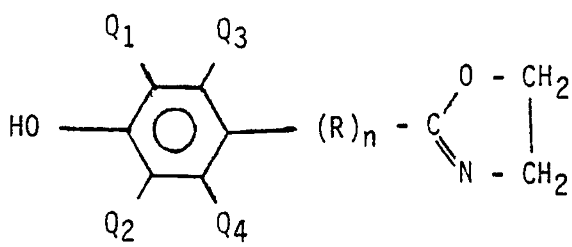

Die Reste $Q_1$, $Q_2$, $Q_3$ und $Q_4$ haben die gleichen Bedeutungen, wie sie vorstehend für $R_1$, $R_2$, $R_3$ und $R_4$ angegeben wurden.

Die Herstellung dieser funktionalisierten Phenole kann nach verschiedenen, an sich bekannten Verfahren erfolgen, z. B.:

a) n = O, Oxazolin, Hydroxyethylamid

Carboxylierung des Natrium- oder Kaliumsalzes von 2,6-Dimethylphenol, Umsetzung mit Ethanolamin entweder direkt oder auf dem Umweg über den Methylester; evtl. Ringschluß zum Oxazolin durch Behandlung mit Thionylchlorid und anschließend mit wäßriger Natriumhydrogencarbonatlösung (vgl. V. Percec et al., J. Polym. Sci., Polym. Lett. Ed. 22, 523 - 532 (1984).

b) n = 1, R = $CH_2$ bzw. $C_2H_4$, Oxazolin, Hydroxyethylamid

Umsetzung von 4-Aceto- bzw. 4-Propio-2,6-dimethylphenol mit Schwefel und einem Amin nach Willgeroth-Kindler und weitere Derivatisierung der entstandenen Carbonsäuren wie oben (vgl. E. Schwenk, D. Papa, J. Org. Chem. 11, 798 (1946).

c) n = 1, R = substituiertes $C_2H_4$, Oxazolin, Hydroxyethylamid

Umsetzung von 2,6-Dimethylphenol mit ggf. substituierten Acrylsäuren unter Katalyse mit Brönstedt- oder Lewissäuren (elektrophile Substitution in para-Stellung) und weitere Derivatisierung der entstandenen Carbonsäuren wie oben (vgl. L. J. Smith et al., J. Am. Chem. Soc. 65, 282, 287 (1943).

d) Oxazolin, Hydroxyethylamid

Analog zu c) können auch andere ungesättigte, aber nichtkonjugierte Carbonsäuren bzw. deren Derivate eingesetzt werden, sofern sie in der Lage sind, sich an Phenole elektrophil zu addieren, z. B. das Diels-Alder-Addukt aus Isopren und Acrylsäure (siehe EP-OS 0 106 799).

Natürlich liegt es auch im Rahmen der vorliegenden Erfindung, daß man zunächst einen Polyphenylenether mit N-(2-Hydroxyethyl)amidgruppe herstellt und anschließend erst den Oxazolinring schließt, indem man etwa ein wasserentziehendes Mittel zusetzt. Umgekehrt kann man den Oxazolinring unter Anlagerung von Wasser bei höherer Temperatur, gegebenenfalls unter Katalyse von Alkalihydroxiden öffnen. Denkbar ist auch, daß man zunächst analog zu DE-OS 17 45 201 ein estergruppenhaltiges Comonomeres einsetzt und dann den entstandenen estergruppenhaltigen Polyphenylenether in Lösung oder in der Schmelze mit Ethanolamin behandelt. Dieser Weg ist jedoch nicht bevorzugt, da wegen der geringen Konzentration an Endgruppen die Amidierung langsamer und weniger vollständig abläuft und man daher drastischere Bedingungen benötigt, als wenn man die Amidierung schon beim Comonomeren durchführt.

Das bei der Polykondensation verwendete, Sauerstoff enthaltende Gas ist in der Regel reiner Sauerstoff oder Luft, die mit Sauerstoff an-oder abgereichert werden kann. Vorzugsweise arbeitet man unter Atmosphärendruck, jedoch ist, abhängig von den anderen Verfahrensparametern, auch die Verwendung von Unter- oder Überdruck möglich.

Als Metallkatalysator können die üblichen aus dem Stand der Technik bekannten Metallsalze eingesetzt werden wie z. B. Kupfer-II-chlorid, Kupfer-II-bromid oder Mangan-II-chlorid. Der basische Cokatalysator ist in der Regel ein primäres, sekundäres oder tertiäres Amin bzw. Diamin bzw. ein Gemisch daraus. Im Falle des Einsatzes halogenhaltiger Phenole ist der Zusatz einer stärkeren Base wie z. B. Natriumhydroxid oder Natriummethanolat sinnvoll.

Die Viskositätszahl J der funktionalisierten Polyphenylenether wird nach DIN 53 728 bei 25 °C in Chloroform (Konzentration 0,5 g/100 ml Lösung) gemessen.

Beispiel 1.1

Herstellung von N-(2-Hydroxyethyl)-4-hydroxy-3,5-dimethylbenzamid

270 g 4-Hydroxy-3,5-dimethylbenzoesäuremethylester wird mit 300 ml Ethanolamin 6 Stunden bei einer Badtemperatur von 160 °C unter gleichzeitigem Abdestillieren des entstehenden Methanols erhitzt. Das überschüssige Ethanolamin wird im Vakuum entfernt. Das glasige Produkt wird gemahlen, gesiebt (1 mm-Sieb) und feingetrocknet (0,5 Torr; 60 °C), Ausbeute 307 g, $^1$H-NMR ($CDCl_3$): Delta = 3,37 (t; $CH_2$); 3,55 (t; $CH_2$)

| | | | | | |
|---|---|---|---|---|---|
| $C_{11}H_{15}O_3N$ (209,27): | Ber. | C 63,13 | H 7,24 | O 22,94 | N 6,69 |
| | Gef. | C 62,54 | H 7,31 | O 23,42 | N 6,72 |

Beispiel 1.2

Herstellung von 2-(4-Hydroxy-3,5-dimethylphenyl)-2-oxazolin

156,75 g des nach Beispiel 1.1 erhaltenen Amides werden in 650 ml Dichlormethan unter Rückfluß gekocht, während innerhalb von 3 Stunden 75 ml Thionylchlorid zugetropft werden. Nach weiteren 15 Stunden Rückfluß wird die Reaktionsmischung auf 5 °C abgekühlt, abgesaugt und der Niederschlag mit 200 ml gekühltem Methylenchlorid gewaschen. Nach dem Trocknen wird die Substanz in 300 ml Wasser aufgeschlämmt und unter kräftigem Rühren eine Lösung von 67,2 g Natriumhydrogencarbonat in 400 ml Wasser langsam zugetropft ($CO_2$-Entwicklung). Die Mischung wird 2 Stunden gerührt, dann auf 5 °C gekühlt, der Niederschlag abgesaugt und mit 160 ml Eiswasser gewaschen. 129,0 g; Schmelzpunkt 184 bis 186 °C, $^1$H-NMR ($CDCl_3$): Delta = 3,87 (t; $CH_2$); 4,42 (t; $CH_2$)

| | | | | | |
|---|---|---|---|---|---|
| $C_{11}H_{13}O_2N$ (191,25): | Ber. | C 69,08 | H 6,87 | O 16,73 | N 7,33 |
| | Gef. | C 68,87 | H 6,82 | O 17,04 | N 7,26 |

Beispiel 1.3

2-(4-Hydroxy-3,5-dimethylphenyl)-essigsäure wird auf bekannte Weise (vgl. J. Org. Chem. 11, 798 (1946) aus 4-Aceto-2,6-dimethylphenol, Schwefel und Morpholin hergestellt (Willgeroth-Kindler-Reaktion); Schmelzpunkt 147 °C. Die Säure wird analog zu Beispiel 1.1 über den Methylester (Schmelzpunkt 95 °C) in das 2-Hydroxyethylamid überführt (gelbbraunes Öl).

| | | | | | |
|---|---|---|---|---|---|
| $C_{12}H_{17}O_3N$ (223,30): | Ber. | C 64,54 | H 7,69 | O 21,50 | N 6,27 |
| | Gef. | C 63,67 | H 7,81 | O 22,14 | N 6,38 |

Beispiel 1.4

3-Methyl-3-(-hydroxy-3,5-dimethylphenyl)-buttersäure wird auf bekannte Weise (vgl. J. Am. Chem. Soc. 65, 282, 287 (1943) aus 2,6-Dimethylphenol, Beta,Beta-Dimethylacrylsäure und Aluminiumtrichlorid in Tetrachlorethen unter Einleiten von Chlorwasserstoff hergestellt; Schmelzpunkt 89 °C. Sie wird analog zu Beispiel 1.1 über den Methylester (Schmelzpunkt 83 °C) in das 2-Hydroxyethylamid überführt (gelbes Öl).

| | | | | | |
|---|---|---|---|---|---|
| $C_{15}H_{23}O_3N$ (265,39): | Ber. | C 67,88 | H 8,75 | O 18,09 | N 5,28 |
| | Gef. | C 67,63 | H 8,78 | O 18,36 | N 5,21 |

Beispiel 2.1

Durch ein Gemisch aus 8 l Toluol, 1,4 l Methanol, 160 g Morpholin und 40 g einer Katalysatorlösung aus 31 g 48-prozentige Bromwasserstoffsäure und 10 g basischem Kupfercarbonat wird bei 30 °C Luft geleitet (1 000 l/h). Innerhalb von 20 Minuten wird ein Gemisch aus 792 g 2,6-Dimethylphenol (99,0 Mol-%), 12,53 g 2-(4-Hydroxy-3,5-dimethylphenyl)-2-oxazolin (1,0 Mol-%) und 900 ml Toluol zugetropft. Danach läßt man weitere 70 Minuten reagieren und stoppt die Reaktion durch Zugabe einer Mischung aus 2,30 l Wasser und 7 g Triethanolamin und 10-minütiges Einleiten von $CO_2$ (2 000 l/h). Die organische Phase wird abgetrennt, mit 8 g 2,6-Di-tert.-butyl-4-methylphenol, 3 l Wasser und 9 g Triethanolamin versetzt und 15 Minuten unter Rückfluß gekocht. Nach erneuter Abtrennung wird die organische Phase mit 20 l Methanol gefällt, mit Methanol gewaschen und getrocknet. Ausbeute 734 g; J = 46 $cm^3$/g. Analyse N: ber. 0,16 %; gef. 0,18 %.

Beispiel 2.2

Analog zu dem in Beispiel 2.1 beschriebenen Verfahren wird ein Gemisch aus 77,6 g 2,6-Dimethylphenol (97,0 Mol-%) und 3,76 g 2-(4-Hydroxy-3,5-dimethylphenyl)-2-oxazolin (3,0 Mol.-%) polykondensiert; J = 21 $cm^3/g$. $^1H$-NMR ($CHCl_3$): Delta = 4,05 (t; $CH_2$); 4,43 (t; $CH_2$). Analyse N: ber. 0,34 %; gef. 0,32 %.

Beispiel 2.3

Analog zu Beispiel 2.1 wird ein Gemisch aus 77,6 g 2,6-Dimethylphenol (97,0 Mol-%) und 4,10 g N-(2-Hydroxyethyl)-4-hydroxy-3,5-dimethylbenzamid (3,0 Mol-%) polykondensiert; J = 29 $cm^3/g$. $^1H$-NMR ($CDCl_3$): Delta = 3,63 (t; $CH_2$); 3,85 (t; $CH_2$), Analyse N: ber. 0,34 %; gef. 0,23 %.

Beispiel 2.4

Analog zu Beispiel 2.1 wird ein Gemisch aus 77,6 g 2,6-Dimethylphenol (97,0 Mol-%) und 4,37 g N-(2-Hydroxyethyl)-2-(4-hydroxy-3,5-dimethylphenyl)-acetamid (vgl. Beispiel 1.3) (3,0 Mol.-%) umgesetzt; J = 22 $cm^3/g$. Analyse N: ber. 0.34 %; gef. 0.32 %.

Beispiel 2.5

Analog zu Beispiel 2.1 wird ein Gemisch aus 76,0 g 2,6-Dimethylphenol (95,0 Mol.-%) und 8,7 g N-(2-Hydroxymethyl)-3-methyl-3-(4-hydroxy-3,5-dimethylphenyl)-buttersäureamid (vgl. Beispiel 1.4) (5,0 Mol-%) umgesetzt. J = 18 $cm^3/g$; Analyse N: ber. 0,47 %; gef. 0,45 %.

**Ansprüche**

1. Polyphenylenether mit mindestens einer funktionellen Endgruppe der Formel

$$-(R)_n-\overset{O}{\overset{\|}{C}}-NR_5-CH_2-CH_2-OH$$ und/oder

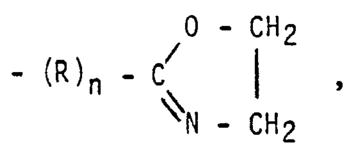

,

wobei R ein 2-wertiger aliphatischer Rest mit 1 bis 12 C- Atomen ist, n den Wert 0 oder 1 hat und $R_5$ für Wasserstoff, eine Alkylgruppe mit 1 bis 8 C-Atomen oder eine Hydroxyalkylgruppe mit 2 bis 8 C-Atomen steht.

2. Verfahren zur Herstellung der Polyphenylenether gemäß Anspruch 1,
dadurch gekennzeichnet,
daß man eine Mischung aus 90 - 99,8 Mol-% eines oder mehrerer Phenole der Formel I

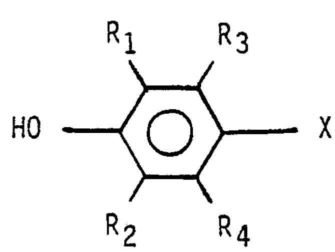

und 0,2 - 10 Mol-% eines oder mehrerer Phenole der Formel II

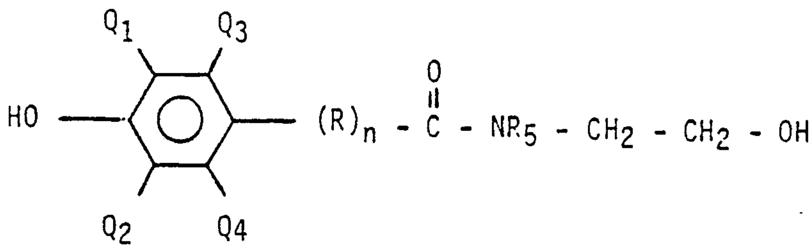

und/oder

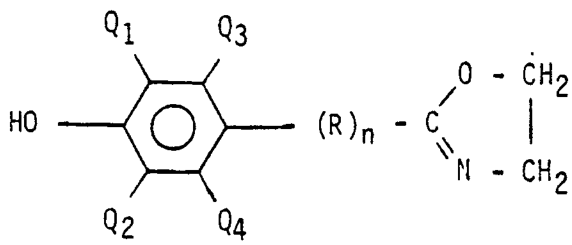

in an sich bekannter Weise polykondensiert, wobei
- $R_1$ und $R_2$ gleiche oder unterschiedliche Reste aus der Gruppe C(1-10)Alkyl, C(5-10)Cycloalkyl, Benzyl und Aryl mit der Einschränkung bedeuten, daß $R_1$ und $R_2$ nicht gleichzeitig tert. Alkylreste sein dürfen,
- $R_3$ und $R_4$ Wasserstoffe sind oder die gleichen Bedeutungen wie $R_1$ und $R_2$ haben,
- X für Wasserstoff oder ein Halogen steht und
- $Q_1$, $Q_2$, $Q_3$ und $Q_4$ die gleichen Bedeutungen wie die entsprechenden Reste $R_1$, $R_2$, $R_3$ und $R_4$ haben.

3. Verfahren zur Herstellung der Polyphenylenether gemäß Anspruch 1 oder 2,
dadurch gekennzeichnet,
daß man ein Polykondensationsprodukt auf Basis eines oder mehrerer Phenole der Formel

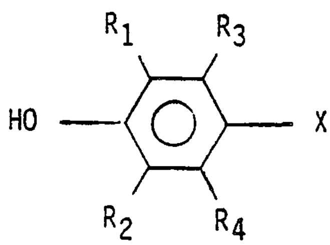

mit 0,2 bis 10 Mol-% eines Phenols der Formel II

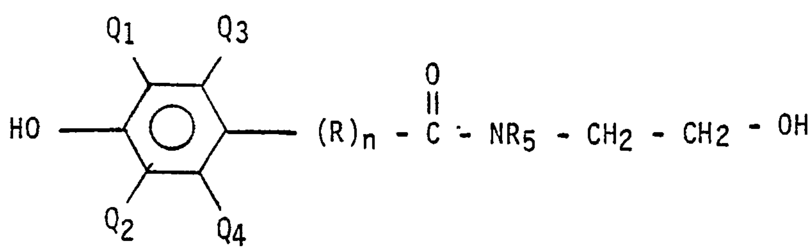

und/oder

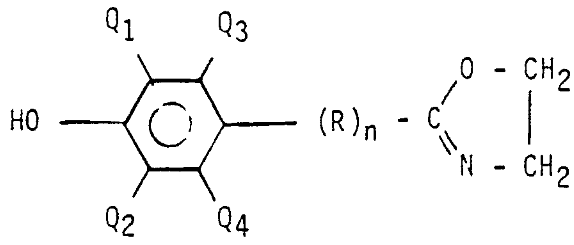

unter Äquilibrierungsbedingungen umsetzt.

Europäisches Patentamt

# EUROPÄISCHER RECHERCHENBERICHT

Nummer der Anmeldung

EP 89 10 2976

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | POLYMER BULLETIN, Band 12, Nr. 3, September 1984, Springer-Verlag 1984, Seiten 261-268; V. PERCEC et al.: "Functional polymers and sequential copolymers by phase transfer catalysis. 12. Functional polymers containing 2-(p-phenoxy)-2-oxazoline pendant groups"<br>* Seiten 261-268 *<br>--- | 1 | C 08 G 65/44<br>C 08 L 71/04 //<br>(C 08 L 71/04<br>C 08 L 77:00 ) |
| D,A | EP-A-0 161 484 (BAYER)<br>* Ansprüche *<br>----- | 1 | |
| | | | **RECHERCHIERTE SACHGEBIETE (Int. Cl.4)** |
| | | | C 08 G |

Der vorliegende Recherchenbericht wurde für alle Patentansprüche erstellt

| Recherchenort | Abschlußdatum der Recherche | Prüfer |
|---|---|---|
| DEN HAAG | 25-04-1989 | DERAEDT G. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)